# EUROPÄISCHE PATENTSCHRIFT

(11) **EP 2 465 669 B1**
(45) Veröffentlichungstag und Bekanntmachung des Hinweises auf die Patenterteilung: **08.01.2014**
(21) Anmeldenummer: 11187361.8
(22) Anmeldetag: 01.11.2011
(51) Int. Cl.: B29D 30/24

(54) **Verfahren zur Herstellung eines Fahrzeugreifens**
Method for producing a tyre for a vehicle
Procédé de fabrication d'un pneu de véhicule

(30) Priorität: 15.12.2010 DE 102010061245
(43) Veröffentlichungstag der Anmeldung: 20.06.2012
(73) Patentinhaber: Continental Reifen Deutschland GmbH, 30165 Hannover (DE)
(72) Erfinder: Thomforde, Claudia, 38542 Leiferde (DE); Elsen, Patrick, 5312 Contern (LU); Kneussel, Ewald, 30890 Barsinghausen (DE)
(74) Vertreter: Finger, Karsten

(56) Entgegenhaltungen:
- EP-A1- 0 503 532
- WO-A1-2008/099236
- WO-A1-2010/070381
- DE-A1- 2 149 398
- LU-A1- 63 107
- US-A- 3 784 437

## Beschreibung

Die Erfindung betrifft ein Verfahren zur Herstellung eines Fahrzeugreifens.

Bei konventionellen Fahrzeugreifen ist bekannt die Einlage im Reifenwulst um einen Wulstkern herumzuschlagen. Dadurch wird die Einlage bzw. die Karkasslage fest im Reifenwulst verankert. Solche herkömmlichen Fahrzeugreifen werden dadurch hergestellt, dass zunächst die Innenschicht und die Einlagen als breite Materiallagen auf einer Reifenaufbautrommel angeordnet werden. Anschließend wird der Wulstkern auf die Einlage gesetzt und das Einlagenende um den Kern herumgeschlagen.
Bei der konventionellen Reifenherstellung wird bei einem Verfahrensschritt das Einlagenende von der Reifeninnenseite um den Wulstkern herumgeschlagen. Bei einem zweistufigen Verfahren zur Herstellung von Fahrzeugreifen wird die Reifenkarkasse auf einer separaten Karkasstrommel aufgebaut. Eine solche Karkasstrommel ist in der Regel relativ komplex aufgebaut.
Die WO 2008/099236 A1 und WO 2010/070381 A1 offenbaren herkömmliche Verfahren zur Herstellung von Fahrzeugreifen mit Reifenaufbautrommeln.

Der Erfindung liegt die Aufgabe zugrunde, ein Verfahren bereitzustellen, mit dem ein Fahrzeugreifen auf einfache Weise hergestellt werden kann.
Insbesondere soll die Komplexität der einzelnen Verfahrensschritte sowie der Reifenaufbautrommel reduziert werden.

Gelöst wird die Aufgabe gemäß Anspruch 1.

Ein Vorteil der Erfindung ist insbesondere darin zu sehen, dass durch das Verfahren auf einfache Weise ein Fahrzeugreifen mit einer optimalen Wulstkonstruktion hergestellt werden kann.
Insbesondere wird die Komplexität der einzelnen Verfahrensschritte sowie der Reifenaufbautrommel insgesamt wesentlich reduziert. Durch den Einsatz der zwei einzelnen mittleren Schultersegemente ist der mittlere Teil der Reifenaufbautrommeln nicht mehr vollständig massiv aus einem Stück. Dadurch wird insbesondere eine Materialeinsparung erzielt und die beiden einzelnen Schultersegmente lassen sich mit einer höheren Variablität verfahren. Ein weiterer Vorteil besteht darin, dass durch die beiden einzelnen Schultersegmente der Abstand zwischen diesen beiden Schultersegmenten variabel eingestellt werden kann. Dadurch lässt sich die Reifenaufbautrommel auf einfache Weise an eine geänderte Reifendimension anpassen. Ebenfalls ist es möglich, diese Reifenaufbautrommel gleichzeitig für einen Bombiervorgang zu nutzen, da die Schultersegmente in axialer Richtung aufeinander zufahren können.

In einer vorteilhaften Weiterbildung der Erfindung ist vorgesehen, dass der Abstand der beiden Schultersegmente zueinander variabel einstellbar ist, wobei durch diesen Abstand die herzustellende Reifendimension variiert werden kann.
Dadurch wird die Umrüstzeit wesentlich reduziert, wenn mit der Karkasstrommel eine andere Reifendimension hergestellt werden soll.

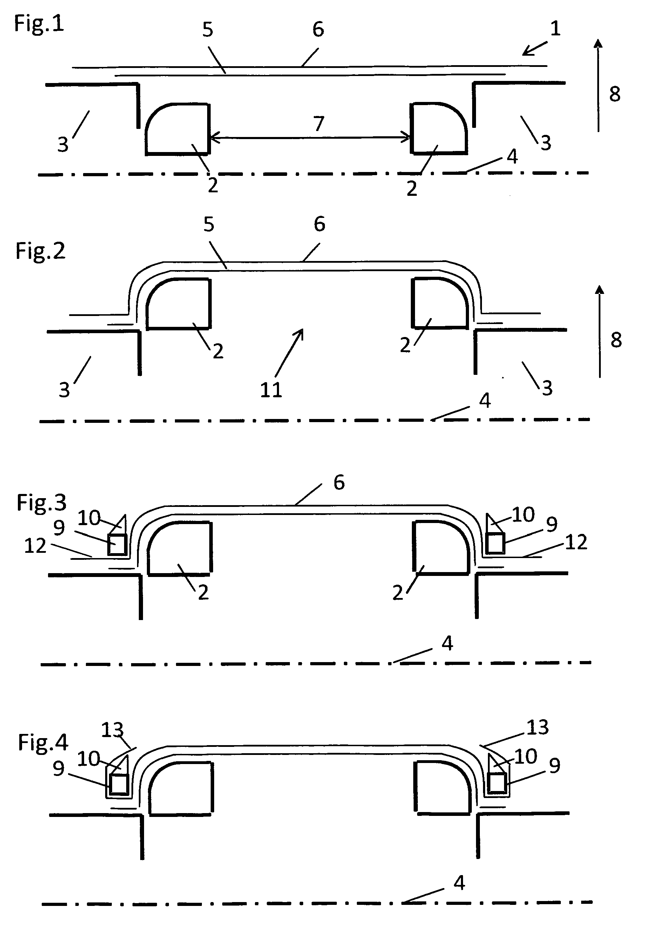

In einer weiteren vorteilhaften Weiterbildung der Erfindung ist vorgesehen, dass die Schultersegmente bei Schritt b) in einer linearen Verfahrbewegung nach radial außen expandieren.
Eine solche lineare Bewegung der Schultersegmente lässt sich auf einfache Weise mit einem Linearantrieb umsetzen. Ein entsprechendes Ausführungsbeispiel ist in den Figuren 1 bis 4 gezeigt.

Es ist vorgesehen, dass die Schultersegmente bei Schritt b) über eine Dreh- oder Kippbewegung nach radial außen expandieren.

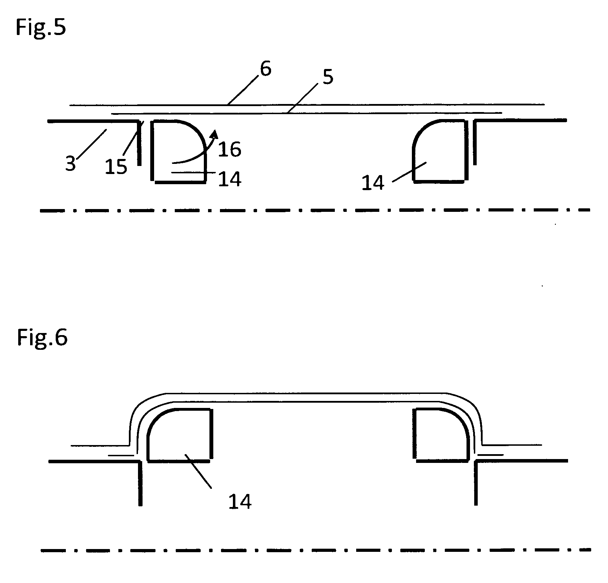

Ein entsprechendes Auführungsbeispiel ist in den Figuren 5 und 6 gezeigt. Die Drehbewegung der Schultersegmente lässt sich einfach umsetzen. Außerdem werden dadurch Lufteinschlüsse auf der Oberseite der Schultersegmente effektiv vermieden.

In einer weiteren vorteilhaften Weiterbildung der Erfindung ist vorgesehen, dass der Drehpunkt für die Drehbewegung der Schultersegmente am radial äußeren Eckpunkt zu den seitlichen Trommelelmenten angeordnet ist.
Dadurch lassen sich die Schultersegmente mit einer hohen Geschwindigkeit hochdrehen.

In einer weiteren vorteilhaften Weiterbildung der Erfindung ist vorgesehen, dass zwischen den beiden Schultersegmenten Mittensegmente angeordnet sind.
Die Mittensegmente unterstüzten bei Schritt a) das Auflegen der Karkasseinlage auf der Karkasstrommel.

In einer weiteren vorteilhaften Weiterbildung der Erfindung ist vorgesehen, dass die Mittensegmente bei Schritt b) nicht nach radial außen expandieren.
Dadurch wird die Komplexität der Karkasstrommel reduziert.

In einer weiteren vorteilhaften Weiterbildung der Erfindung ist vorgesehen, dass der Hohlraum der Karkasstrommel bei einem oder mehreren Schritten a) bis e) mit Druckluft beaufschlagt wird, um dadurch die Karkasseinlage von der Innenseite zu stützen.
Die Beaufschlagung der Karkasstrommel mit Druckluft verhindert inbesondere Lufteinschlüsse zwischen der Reifeninnenseele und der darüber angeordneten Karkasseinlage.

In einer weiteren vorteilhaften Weiterbildung der Erfindung ist vorgesehen, dass das Expandieren der Schultersegmente bei Schritt b) mit einem pneumatischen oder einem motorischen Antrieb erfolgt.
Mit solchen Antrieben lassen sich die Schultersegmente mit einer relativ hohen Geschwindigkeit expandieren.

In einer weiteren vorteilhaften Weiterbildung der Erfindung ist vorgesehen, dass die Schultersegmente an den Außenseiten jeweils eine abgerundete Form aufweisen.
Auf diese Weise wird die Schulterbildung der Karkasseinlage wesentlich unterstützt.

In einer weiteren vorteilhaften Weiterbildung der Erfindung ist vorgesehen, dass das überstehende Karkasseinlagen-Ende bei Schritt d) bis zum gegenüberliegenden Wulstkern umgeschlagen wird.
In diesem Fall wird der entsprechende Fahrzeugreifen mit einer sogenannten ¾-Lage versehen. Bei bestimmten Reifenkonstruktionen ist eine derartige Lagenkonstruktion notwendig.

In einer weiteren vorteilhaften Weiterbildung der Erfindung ist vorgesehen, dass die Fertigstellung des Reifenrohlings auf einer separaten Bombierstation erfolgt.

In diesem Fall würde die Reifenkarkasse von der Karkasstrommel abgenommen werden und anschließend zu einer Bombierstation transportiert werden. An dieser Bombierstation wird der Reifen vervollständigt werden.

Anhand mehrerer Ausführungsbeispiele soll die Erfindung näher erläutert werden. Es zeigen:
Figuren 1 - 4: ein erstes Ausführungsbeispiel des erfindungsgemäßen Verfahrens,
Figuren 5 - 6: ein zweites Ausführungsbeispiel des Verfahrens,
Figuren 7 - 8: ein weiteres Auführungsbeispiel des Verfahrens mit Mittensegmenten,
Figuren 9 - 10: ein weiteres Ausführungsbeispiel des Verfahrens.

Die Figuren 1 - 4 zeigen ein erstes Ausführungsbeispiel des erfindungsgemäßen Verfahrens. In der Figur 1 ist ein erster Verfahrensschritt dargestellt, bei dem die Karkasstrommel 1 mit den Schultersegmenten 2 und seitlichen Trommelsegmenten 3 dargestellt ist. Die Karkasstrommel 1 ist in einer Radialschnittansicht dargestellt, wobei alle Bauteile rotationssymmetrisch zu der Symmetrieachse 4 sind. Zur vereinfachten Darstellung wurde nur die obere Hälfte der Karkasstrommel 1 dargestellt.

Die seitlichen Trommelsegmente 3 sind ebenfalls nur schematisch dargestellt. Das Verfahren beginnt damit, dass auf die Karkasstrommel 1 zunächst die Reifeninnenseele 5 aufgelegt bzw. aufgewickelt wird. Anschließend erfolgt das Aufwickeln der Karkasseinlage 6 über die Reifeninnenseele 5. Der Abstand 7 zwischen den beiden Schultersegmenten 2 ist variabel einstellbar. Dadurch können mit der gleichen Karkasstrommel unterschiedliche Reifendimensionen hergestellt werden. Der Pfeil 8 zeigt die radiale Richtung der Karakasstrommel an.

Die Figur 2 zeigt einen weiteren Verfahrensschritt bei dem die Schultersegmente 2 in radialer Richtung 8 expandiert sind. Dabei wird die Karkasseinlage 6 und die Reifeninnenseele 5 entsprechend schulterförmig angehoben. Es entsteht dabei ein Absatz zwischen den Schultersegmenten 2 und den seitlichen Trommelsegmenten 3. Denkbar ist, dass bei diesem Verfahrensschritt der Hohlraum 11 in der Karkasstrommel mit Druckluft beaufschlagt wird, um einen entsprechenden Gegendruck an der Karkasseinlage zu erzeugen.

Die Figur 3 zeigt den Verfahrensschritt bei dem die Reifenkerne 9 mit den Apexen 10 seitlich an den Schultersegmenten 2 angeordnet werden und dabei die Karkasseinlage 6 entsprechend einklemmt. Das Karkasseinlagenende 12 steht in axialer Richtung unterhalb der Wulstkerne 9 über.

Die Figur 4 zeigt den Verfahrensschritt bei dem das Karkasseinlagenende 13 bereits um den Wulstkern 9 umgeschlagen worden ist. In einem weiteren nicht dargestellten Verfahrensschritt würden die Schultersegmente einfahren und anschließend die Reifenkarkasse von der Karkasstrommel 1 abgenommen werden. Anschließend würde die Reifenkarkasse zu der nicht dargestellten Bombierstation gebracht werden.

Die Figur 5 zeigt ein weiters Ausführungsbeispiel des Verfahrens bei dem die Schultersegmente 14 mit einem Drehmechanismus ausgestattet sind. Der Drehpunkt 15 der Schultersegmente ist am radial äußeren Eckpunkt zu den seitlichen Trommelelementen 3 angeordnet. Das Auflegen der Reifeninnenseele 5 und der Karkasseinlage 6 erfolgt wie bei dem oben genannten Ausführungsbeispiel in der Figur 1. Die Drehrichtung 16 zeigt die Drehbewegung der Schultersegmente 14.

Die Figur 6 zeigt die Schultersegmente 14 im exandierten Zustand, wobei die Schultersegmente 14 entsprechend hochgeklappt worden sind. Anschließend würden analoge Verfahrensschritte erfolgen wie sie in dem vorrigen Ausführungsbeispiel in den Figuren 3 und 4 gezeigt sind.

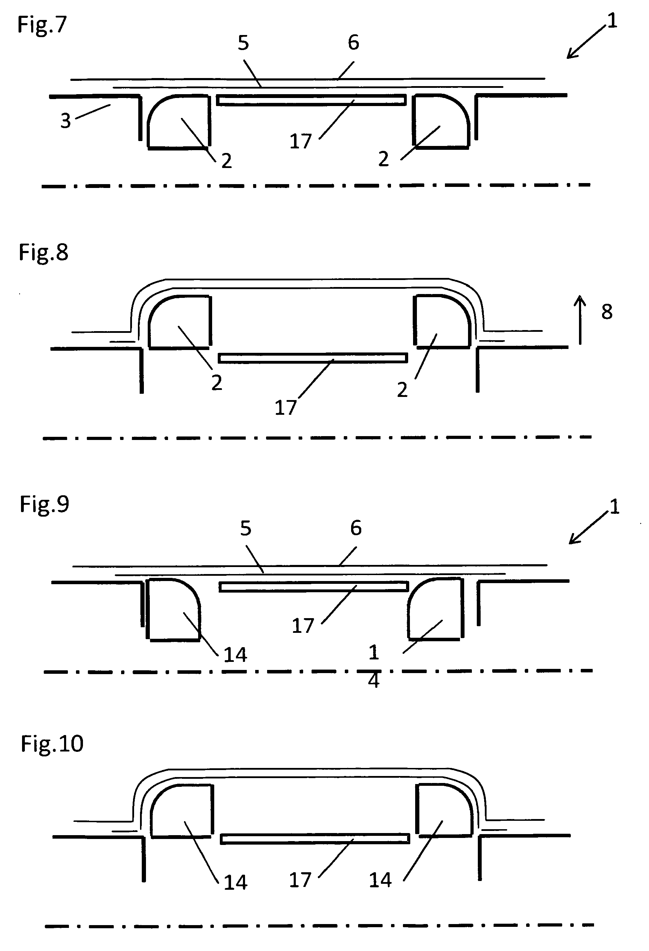

Die Figur 7 zeigt ein drittes Ausführungsbeispiel bei dem Mittensegmente 17 vorgesehen sind. Diese Mittensegmente 17 sind zwischen den beiden Schultersegmenten 2 angeordnet. Die Mittensegmente 17 unterstüzten das Auflegen bzw. Aufwickeln der Reifeninnenseele 5 und der Karkasseinlage 6 auf die Karkasstrommel 1.

Die Figur 8 zeigt das Expandieren der Schultersegmente 2 in radialer Richtung 8. Bei diesem Verfahrensschritt bleiben die Mittensegmente 17 ortsfest stehen.

Figur 9 zeigt die Karkasstrommel 1 mit dem Mittensegment 17 und den Schultersegmenten 14 mit einem entsprechenden Drehmechanismus. Das Auflegen der Reifeninnenseele 5 und der Karkasseinlage 6 erfolgt wie bei dem oben genannten Verfahren in der Figur 1. Die Figur 10 zeigt den Verfahrensschritt bei dem die Schultersegmente 14 über ein Hochdrehen nach radial außen expandiert worden sind. Das Mittensegment 17 verändert bei diesem Verfahrensschritt nicht seine Position. Anschließend wird das Verfahren mit den analogen Verfahrensschritten fortgesetzt, wie sie in den oben genannten Ausführungsbeispielen der Figuren 3 und 4 dargestellt sind.

### Bezugszeichenliste

- 1: Karkasstrommel
- 2: Linkes und rechtes Schultersegment
- 3: Linkes und rechtes seitliches Trommelsegment bzw. Trommelelemente
- 4: Symmetrieachse bzw. Mittelachse der Karkasstrommel
- 5: Reifeninnenseele
- 6: Karkasseinlage
- 7: Abstand der Schultersegmente zueinander in axialer Richtung
- 8: radiale Richtung der Karkasstrommel
- 9: Wulstkerne
- 10: Apex
- 11: Hohlraum in der Karkasstrommel
- 12: Karkasseinlagen-Ende
- 13: Umgeschlagenes Karkasseinlagen-Ende
- 14: Linkes und rechtes Schultersegment mit Drehmechanismus
- 15: Drehpunkt der Schultersegmente
- 16: Drehrichtung der Schultersegmente
- 17: Mittensegment

## Patentansprüche

1. Verfahren zur Herstellung eines Fahrzeugreifens mit folgenden Schritten:
a) Auflegen einer Karkasseinlage (6) auf einer Karkasstrommel (1), wobei die Karkasstrommel zwei seitliche Trommelsegmenten (3) und zwei mittlere Schultersegmente (2) aufweist,
b) Expandieren der zwei mittleren Schultersegmente (2) in radial äußerer Richtung (8), wodurch ein Absatz zwischen den seitlichen Trommelsegmenten (3) und den zwei mittleren Schultersegmenten (2) gebildet wird und
wobei die Karkasseinlage (6) im mittleren Bereich expandiert wird,
wobei die Schultersegmente (2) über eine Dreh- oder Kippbewegung nach radial außen expandieren,
c) Anordnen von jeweils einem Wulstkern (9) mit einem Apex (10) auf beiden Seiten der expandierten Karkasseinlage (6),
wobei die Wulstkerne (9)jeweils seitlich an den beiden mittleren Schultersegmenten (2) anliegen und dadurch die Karkasseinlage (6) zwischen den Schultersegmenten (2) sowie den Wulstkernen (9) eingeklemmt wird,
d) Umschlagen des am Wulstkern (9) überstehenden Karkasseinlagen-Endes (13) um den Wulstkern (9),
wobei mit dem Lagenumschlag zumindestens der Wulstkern (9) und der Apex (10) vollständig mit dem Karkasseinlagen-Ende (13) abgedeckt wird,
e) Vervollständigung des Reifenrohlings mit einem konventionellen Herstellungsverfahren.

2. Verfahren nach Anspruch 1,
**dadurch gekennzeichnet, dass**
der Abstand (7) der beiden Schultersegmente (2) zueinander variabel einstellbar ist, wobei durch diesen Abstand (7) die herzustellende Reifendimension variiert werden kann.

3. Verfahren nach einem der vorhergehenden Ansprüche,
**dadurch gekennzeichnet, dass**
die Schultersegmente (2) bei Schritt b) in einer linearen Verfahrbewegung nach radial außen expandieren.

4. Verfahren nach einem der vorhergehenden Ansprüche,
**dadurch gekennzeichnet, dass**
der Drehpunkt (15) für die Drehbewegung der Schultersegmente (2) am radial äußeren Eckpunkt zu den seitlichen Trommelsegmente (3) angeordnet ist.

5. Verfahren nach einem der vorhergehenden Ansprüche,
**dadurch gekennzeichnet, dass**
zwischen den beiden Schultersegmenten (2) Mittensegmente (17) angeordnet sind.

6. Verfahren nach einem der vorhergehenden Ansprüche,
**dadurch gekennzeichnet, dass**
die Mittensegmente (17) bei Schritt b) nicht nach radial außen (8) expandieren.

7. Verfahren nach einem der vorhergehenden Ansprüche,
**dadurch gekennzeichnet, dass**
der Hohlraum der Karkasstrommel (1) bei einem oder mehreren Schritten a) bis e) mit Druckluft beaufschlagt wird, um dadurch die Karkasseinlage (6) von der Innenseite zu stützen.

8. Verfahren nach einem der vorhergehenden Ansprüche,
**dadurch gekennzeichnet, dass**
das Expandieren der Schultersegmente (2) bei Schritt b) mit einem pneumatischen oder einem motorischen Antrieb erfolgt.

9. Verfahren nach einem der vorhergehenden Ansprüche,
**dadurch gekennzeichnet, dass**
die Schultersegmente (2) an den Außenseiten jeweils eine abgerundete Form aufweisen.

10. Verfahren nach einem der vorhergehenden Ansprüche,
**dadurch gekennzeichnet, dass**
das überstehende Karkasseinlagen-Ende (12) bei Schritt d) bis zum gegenüberliegenden Wulstkern (9) umgeschlagen wird.

11. Verfahren nach einem der vorhergehenden Ansprüche,
**dadurch gekennzeichnet, dass**
die Fertigstellung des Reifenrohlings auf einer separaten Bombierstation erfolgt.

## Claims

1. Method for producing a vehicle tyre having the following steps:
a) placing a carcass insert (6) on a carcass drum (1), the carcass drum comprising two lateral drum segments (3) and two middle shoulder segments (2),
b) expanding the two middle shoulder segments (2) in a radially outward direction (8), an offset being formed between the lateral drum segments (3) and the two middle shoulder segments (2), and
the carcass insert (6) being expanded in the middle region,
the shoulder segments (2) expanding radially outwards by means of a pivoting or tilting movement,
c) arranging a bead core (9) with an apex (10) respectively on both sides of the expanded carcass insert (6),
the bead cores (9) respectively lying laterally against the two middle shoulder segments (2) and, as a result, the carcass insert (6) being clamped between the shoulder segments (2) and the bead cores (9),
d) turning up the end (13) of the carcass insert that projects beyond the bead core (9) around the bead core (9),
the ply turnup having the effect that at least the bead core (9) and the apex (10) are completely covered by the end (13) of the carcass insert,
e) completing the tyre blank by a conventional production method.

2. Method according to Claim 1, **characterized in that** the distance (7) between the two shoulder segments (2) can be variably set, this distance (7) allowing the size of tyre to be produced to be varied.

3. Method according to one of the preceding claims, **characterized in that** the shoulder segments (2) expand radially outwards in step b) in a linear travelling movement.

4. Method according to one of the preceding claims, **characterized in that** the pivoting point (15) for the pivoting movement of the shoulder segments (2) is arranged at the radially outer corner point in relation to the lateral drum segments (3).

5. Method according to one of the preceding claims, **characterized in that** middle segments (17) are arranged between the two shoulder segments (2).

6. Method according to one of the preceding claims, **characterized in that** the middle segments (17) do not expand radially outwards (8) in step b).

7. Method according to one of the preceding claims, **characterized in that** compressed air is admitted to the cavity of the carcass drum (1) in one or more of steps a) to e), in order in this way to support the carcass insert (6) from the inside.

8. Method according to one of the preceding claims, **characterized in that** the expanding of the shoulder segments (2) in step b) is performed with a pneumatic or motor drive.

9. Method according to one of the preceding claims, **characterized in that** the shoulder segments (2) respectively have a rounded form on the outer sides.

10. Method according to one of the preceding claims, **characterized in that** the projecting end (12) of the carcass insert is turned up in step d) over as far as the opposite bead core (9).

11. Method according to one of the preceding claims, **characterized in that** the completion of the tyre blank is performed on a separate shaping station.

## Revendications

1. Procédé de fabrication d'un bandage pour roue de véhicule, le procédé présentant les étapes suivantes :
a) placement d'une garniture de carcasse (6) sur un tambour de carcasse (1), le tambour de carcasse présentant deux segments latéraux (3) de tambour et deux segments centraux d'épaulement (2),
b) dilatation des deux segments centraux d'épaulement (2) dans la direction radiale extérieure (8), ce qui forme un décalage entre les segments latéraux (3) du tambour et les deux segments centraux d'épaulement (2), la garniture de carcasse (6) étant dilatée dans sa partie centrale, les segments d'épaulement (2) se dilatant radialement vers l'extérieur par un déplacement de rotation ou d'inclinaison,
c) placement d'une âme de bourrelet (9) dotée d'un sommet (10) sur les deux côtés de la garniture de carcasse (6) dilatée, les âmes de bourrelet (9) reposant chacune sur les deux segments centraux d'épaulement (2), de telle sorte que la garniture de carcasse (6) soit serrée entre les segments d'épaulement (2) et les âmes de bourrelet (9),
d) rabattement de l'extrémité (13) de la garniture de carcasse qui déborde sur l'âme de bourrelet (9) autour de l'âme de bourrelet (9), le rabattement de couche couvrant au moins l'âme de bourrelet (9) et le sommet (10) complètement par l'extrémité (13) de la garniture de carcasse,
e) finition de l'ébauche de bandage de roue par un procédé classique de fabrication.

2. Procédé selon la revendication 1, **caractérisé en ce que** la distance (7) entre les deux segments d'épaulement (2) peut être ajustée de manière variable, la dimension du bandage de roue à fabriquer pouvant être modifiée par cette distance (7).

3. Procédé selon l'une des revendications précédentes, **caractérisé en ce que** les segments d'épaulement (2) se dilatent radialement vers l'extérieur par un déplacement linéaire lors de l'étape b).

4. Procédé selon l'une des revendications précédentes, **caractérisé en ce que** le centre de rotation (15) du déplacement de rotation des segments d'épaulement (2) est disposé sur le sommet situé radialement à l'extérieur par rapport aux segments latéraux (3) du tambour.

5. Procédé selon l'une des revendications précédentes, **caractérisé en ce que** des segments médians (17) sont disposés entre les deux segments d'épaulement (2).

6. Procédé selon l'une des revendications précédentes, **caractérisé en ce que** lors de l'étape b), les segments médians (17) ne se dilatent pas radialement vers l'extérieur (8).

7. Procédé selon l'une des revendications précédentes, **caractérisé en ce que** lors d'une ou plusieurs des étapes a) à e), de l'air comprimé est appliqué sur la cavité du tambour de carcasse (1) pour ainsi soutenir la garniture de carcasse (6) par l'intérieur.

8. Procédé selon l'une des revendications précédentes, **caractérisé en ce que** lors de l'étape b), la dilatation des segments d'épaulement (2) s'effectue par un entraînement pneumatique ou motorisé.

9. Procédé selon l'une des revendications précédentes, **caractérisé en ce que** le segment d'épaulement (2) présente une forme arrondie sur son côté extérieur.

10. Procédé selon l'une des revendications précédentes, **caractérisé en ce qu'**à l'étape d), l'extrémité (12) en débord de la garniture de carcasse est rabattue jusqu'à l'âme de bourrelet (9) opposée.

11. Procédé selon l'une des revendications précédentes, **caractérisé en ce que** la finition de l'ébauche de pneu s'effectue sur un poste de bombage séparé.
